# NEUE EUROPÄISCHE PATENTSCHRIFT

(11) **EP 0 879 791 B2**
(45) Veröffentlichungstag und Bekanntmachung des Hinweises auf die Entscheidung über den Einspruch: **12.10.2005**
(45) Hinweis auf die Patenterteilung: 03.01.2001
(21) Anmeldenummer: 98104890.3
(22) Anmeldetag: 18.03.1998
(51) Int. Cl.: C01G 19/00, H01B 1/08, C01B 13/32

(54) **Verfahren zur Herstellung eines ITO-Mischkristallpulvers mit geringem elektrischem Widerstand**
Process for the preparation of ITO mixed crystalline powder with low electric resistance
Procédé de préparation de poudres de cristaux mixtes ITO ayant une basse résistance éléctrique

(30) Priorität: 23.05.1997 DE 19721649
(43) Veröffentlichungstag der Anmeldung: 25.11.1998
(73) Patentinhaber: W.C. Heraeus GmbH, 63450 Hanau (DE)
(72) Erfinder: Lupton, David Francis, Dr., 63571 Gelnhausen (DE); Schielke, Jörg, 63786 Bruchköbel (DE); Gorywoda, Marek, Dr., 63452 Hanau (DE); Serole, Bernard, 26380 Peyrins (FR); Schölz, Friedhold, 63517 Rodenbach (DE)
(74) Vertreter: Kühn, Hans-Christian

(56) Entgegenhaltungen:
- EP-A- 0 467 194
- DE-C- 19 540 379
- JP-A- 524 836
- PATENT ABSTRACTS OF JAPAN vol. 017, no. 086 (C-1028), 19. Februar 1993 & JP 04 281840 A (TAKESHI MASUMOTO;OTHERS: 01), 7. Oktober 1992
- Y.Shigesato et al., Appl.Surf.Sci. 48/49 (1991)269.
- Katalogue of Kojundo Chemical Laboratory of 1993.
- Brockhaus, Naturwissenschaften und Technik, Vol.1, page 249.
- Salamang/Scholze, "Die physikalischen und chemischen Grundlagen der Keramik", 1968, pages 224-227.
- Moulson/Herbert, "Electroceramics", 1990, pages 88-89.
- New Ceramics (1992), No. 12, pages 47-48 (incl.partial translation D10a)
- Computerized English translation of D2.
- Evans/De Jonghe, "The productiuon of inorganic materials", 1991, pages 398.

## Beschreibung

Die Erfindung betrifft ein Verfahren zur Herstellung eines Mischkristallpulvers mit einem elektrischem Widerstand kleiner 100 Ωcm durch die Reaktion mindestens zweier Reaktionspartner in einem Plasmalichtbogen einer eine Einfüllöffnung für die Reaktionspartner und eine Auslaßöffnung mit einer Gaszufuhrvorrichtung aufweisenden Plasmakammer zu einem schmelzflüssigen Material, wobei als erster Reaktionspartner eine schmelzflüssige Indium-Zinn-Legierung und als zweiter Reaktionspartner ein Gas verwendet werden, sowie ein danach hergestelltes Indium-Zinn-Oxid Mischkristallpulver und seine Verwendung.

Zur Herstellung von Mischkristallpulvem sind verschiedene Verfahren bekannt. Besonderes Interesse wird in zahlreichen Veröffentlichungen Indium-Zinn-Oxid (ITO) Pulvern und ihrer Herstellung gewidmet, wobei diese für ITO-Sputtertargets verwendet werden. In diesem Zusammenhang wird eine hohe elektrische Leitfähigkeit der Targets als ein wünschenswertes Merkmal angesprochen im Hinblick auf die mit den ITO-Targets zu erzielenden hohen Sputterraten. Diese Eigenschaft der Targets wird neben dem Anteil an metallischer Phase wesentlich durch den spezifischen elektrischen Widerstand des für die Herstellung der Targets mittels Sinterung verwendeten ITO-Pulvers bestimmt. In ähnlicher Weise verlangt eine mittels ITO-Paste hergestellte gut leitfähige Schicht ein ITO-Pulver mit einem entsprechend geringen elektrischen Widerstand.

In EP 386 932 A1 wird ein Verfahren zur Herstellung eines ITO-Pulvers offenbart, das auf der thermischen Zersetzung von aufkonzentrierten Mischsalzen aus Indium-Zinn-Acetaten basiert.

Durch dieses aufwendige Verfahren werden ITO-Pulver mit besonderen Eigenschaften in Bezug auf ihre Korncharakteristik erhalten. Derartige Pulver werden zu Targets weiterverarbeitet, mit denen in Vakuumbeschichtungsanlagen ITO-Filme erzeugt werden. Weiterhin werden in EP 386 932 Angaben zur elektrischen Leitfähigkeit dieser ITO-Filme gemacht, nicht jedoch über die elektrische Leitfähigkeit bzw. über den elektrischen Widerstand des ITO-Pulvers oder über die diese Eigenschaft beeinflussenden Prozeßparameter.

Ein weiteres chemisches Verfahren für die Herstellung von ITO-Pulvern ist das durch Fällung und anschließende Kalzinierung von In-Hydroxid aus einer In-Nitratlösung und Sn-Hydroxid aus einer Sn-Chloridlösung. Quantitative Angaben über den spezifischen elektrischen Widerstand dieser wie der oben erwähnten ITO-Pulver sind jedoch im allgemeinen nicht verfügbar. Ebensowenig werden Zusammenhänge zwischen dem spezifischen elektrischen Widerstand der Mischkristallpulver und einzelnen Prozeßmerkmalen bei den Verfahren zur Herstellung derartiger Pulver angegeben.

Es ist daher Aufgabe der Erfindung, ein Verfahren zur Herstellung eines ITO-Mischkristallpulvers anzugeben, das einen geringen spezifischen elektrischen Widerstand, kleiner 100 Ωcm aufweist, wobei das Verfahren keine naßchemischen Verfahrensschritte beinhalten soll. Das dabei gewonnene Mischkristallpulver soll sich ohne weitere Maßnahmen, wie beispielsweise eine Glühung unter reduzierender Atmosphäre, zur Weiterverarbeitung in pulvermetallurgischen Verfahren eignen.

Die Aufgabe wird dadurch gelöst, daß das im Plasmalichtbogen in einer Plasmakammer reagierte, schmelzflüssige Material an der Auslaßöffnung der Plasmakammer mit einem Gasstrom beaufschlagt wird, der das Material mit einer Abkühlrate im Bereich von 10⁵ K/s bis 10⁸ K/s auf eine Temperatur zwischen 50°C und 400°C abkühlt, wobei ein Indium-Zinn-Oxid Mischkristallpulver entsteht.
Die elektrische Leitfähigkeit bzw. deren Kehrwert, der spezifische elektrische Widerstand, wird von folgenden Faktoren beeinflußt bzw. optimiert:
- Maximierung der Konzentration der elektrischen Ladungsträger durch "Einfrieren" der sich bei Schmelztemperatur im Gleichgewicht befindenden Anionenleerstellen.
- Gleichmäßige und vollständige Verteilung der Atome der zur Mobilität der Ladungsträger beitragenden Dotierungselemente im Mischkristallgitter.
- Hohe Dichte der durch die Kristallisation des erschmolzenen Oxids entstandenen einzelnen Mischkristallteilchen.

Die vorgenannten Mechanismen bezüglich Konzentration und Mobilität der Ladungsträger, die den spezifischen elektrischen Widerstand beeinflussen, werden in US 5,580,641 insbesondere für Indium-Zinn-Oxid näher erläutert. Hier wird unter anderem erklärt, daß die Ladungsträger sowohl auf die zudotierten Sn-Atome als auch auf die Sauerstoffleerstellen zurückzuführen sind. Da Sn ein Element der Gruppe IV und In ein Element der Gruppe III des Periodensystems ist, erhöhen sowohl die Sn-Atome als auch die Sauerstoffleerstellen die Konzentration der überschüssigen Elektronen im In₂O₃-Kristallgitter. Da In₂O₃ teils ionische, teils kovalente Bindungseigenschaften aufweist (während Si oder Ge als "klassische" Halbleiter mit kovalenter IV-IV-Bindung betrachtet werden können), haben die überschüssigen Elektronen eine hohe Mobilität. In US 5,580,641 wird weiterhin gezeigt, daß durch die Implantation von Sauerstoffionen in ITO-Schichten sowohl die Sauerstoffleerstellen als auch die Elektronen-Donatoren als Ladungsträger eliminiert und die Schichten weitestgehend in Isolatoren umgewandelt werden können.

Den Zusammenhang zwischen spezifischem elektrischem Widerstand und der Konzentration bzw. Mobilität der Ladungsträger in undotiertem und mit Zinndotiertem Indium-Oxid-Einkristallen wird von S. J. Wen et al. Journal of Solid State Chemistry 101, 203 - 210 (1992) "Electrical Properties of Pure In₂O₃ and Sn-Doped In₂O₃ Single Crystals and Ceramics" behandelt. Es wird dabei festgestellt, daß bei den undotierten Einkristallen die Mobilität der Ladungsträger mit zunehmender Konzentration abnimmt. Durch das Zudotieren von Zinn nehmen sowohl Konzentration als auch Mobilität der Ladungsträger zu, was zum bekannten Minimum des elektrischen Widerstands bei einem SnO₂-Anteil von etwa 10 Mol. % führt. Die hier beschriebenen, undotierten Indium-Oxid- Einkristalle werden bei Temperaturen zwischen 1250°C und 1300°C gezüchtet und weisen Ladungsträgerkonzentrationen von etwa 1,8 x 10¹⁹ cm⁻³ auf. Mit Zinn dotierte Einkristalle zeigen höhere Ladungsträgerkonzentrationen, nämlich bis 2,8 x 10²⁰ cm⁻³. Nach US 5,580,641 weisen typische ITO-Schichten mit einem geringen spezifischen elektrischen Widerstand Sauerstoffleerstellenkonzentrationen und Zinn-Elektronen-Donatoren-Konzentrationen von jeweils ca. 3 x 10²⁰ cm⁻³ auf.
Anhand von diesen Berichten ist es klar, daß hohe Konzentrationen von Sauerstoffleerstellen und Elektronen-Donatoren im Indium-Oxid-Mischkristallgitter zu hohen elektrischen Leitfähigkeiten keiten bzw. niedrigem spezifischem Widerstand führen. Weiter ist festzustellen, daß die Konzentration der Sauerstoffleerstellen in einem oxidischen Mischkristall erhöht werden kann, wenn dieser als Festkörper einer möglichst hohen Temperatur ausgesetzt und dieser Zustand bei niedrigerer Temperatur stabilisiert wird, indem man rasch abgekühlt. Als möglichst hohe Temperatur ist hierbei eine Temperatur knapp unter dem Schmelzpunkt zu verstehen.

Ausgehend von dieser Betrachtung wird für die Herstellung eines ITO-Mischkristallpulvers mit einem geringen elektrischen Widerstand ein Verfahren ausgewählt, bei dem durch die Reaktionsbehandlung einer entsprechend dotierten, metallischen Schmelze und anschließendes rasches Abkühlen ein Mischkristallpulver erzeugt wird, das sich sowohl durch einen geringen spezifischen Widerstand mit einer damit einhergehenden hohen Wärmeleitfähigkeit, als auch durch eine hohe Schütt- und Pressdichte auszeichnet. Das Verfahren basiert auf dem aus DE 195 40 379 bekannten Verfahren, wobei sich gezeigt hat, daß das im Plasmalichtbogen bei ca. 2000 °C bis 3000 °C reagierte, schmelzflüssige Material beim Austragen aus der Plasmakammer mit einer Abkühlrate größer 10⁵ K/s abgekühlt werden muß, um ein Mischkristallpulver mit einem niedrigen elektrischen Widerstand, kleiner 100 Ωcm zu erzielen. Vorteilhaft ist eine Abkühlrate des Mischkristallpulvers im Bereich zwischen 10⁶ K/s und 10⁸K/s. Bei extrem hohen Abkühlraten größer 10⁸ K/s besteht allerdings die Gefahr, daß das Mischkristallpulver nicht kristallin, sondern amorph erstarrt, was andere Pulvereigenschaften hervorruft.

Die Geschwindigkeit des Gasstromes, der für die Abkühlung des Materials verantwortlich ist, liegt vorteilhafterweise im Bereich zwischen 300 m/s und 500 m/s.

Es hat sich bewährt, daß als zweiter Reaktionspartner, der in die Plasmakammer eingeführt wird, Sauerstoff verwendet wird. Mit den beiden Reaktionspartnern Indium-Zinn-Legierung und Sauerstoff, die in dem Plasmalichtbogen reagieren und anschließend nach dem erfindungsgemäßen Verfahren abgekühlt werden, wird ein Indium-Zinn-Oxid Mischkristallpulver erhalten, das mindestens 90 Vol. % Mischkristallphase im Kristallgitter von Indium-Oxid aufweist.

Bei dem Indium-Zinn-Oxid (ITO) Mischkristallpulver führt die rasche Abkühlung aus der Zinndotierten Indium-Oxid-Schmelze zu einer optimalen Verteilung der Zinn-Atome auf Indium-Gitterplätze im Indium-Oxid-Kristallgitter, was, wie oben erläutert, einen niedrigen spezifischen elektrischen Widerstand des ITO- Mischkristallpulvers bewirkt.

Dieses ITO-Pulver, auf 35 bis 50 % seiner theoretischen Dichte verdichtet, zeigt einen spezifischen elektrischen Widerstand im Bereich von 0,01 Ω cm bis 95 Ω cm. Der spezifische Widerstand wird an dem ITO-Pulver ermittelt, indem es in eine einfache Pressform gefüllt und an einer uniaxialen Presse auf mehr als 35 %, vorzugsweise auf 40 % seiner theoretischen Dichte verdichtet wird. Während des Verdichtens wird kontinuierlich bei einem konstanten Strom der Spannungsabfall über den Preßling gemessen und dadurch der spezifische elektrische Widerstand ermittelt, wobei Ober- und Unterstempel der Pressform als Elektrode bzw. Gegenelektrode fungieren. Die wiederholte Messung an mehreren Herstellchargen des ITO-Pulvers hat den geringen spezifischen elektrischen Widerstand immer wieder bestätigt. Selbst als Pulverschüttung mit einer Klopfdichte von 2,7 g/cm³ weist das ITO-Pulver einen spezifischen elektrischen Widerstand von höchstens 10 Ω cm auf.

Der geringe spezifische elektrische Widerstand bzw. die hohe elektrische Leitfähigkeit des ITO-Mischkristallpulvers geht mit einer entsprechend hohen Ladungsträgerkonzentration einher. Die Ladungsträgerkonzentration des erfindungsgemäßen Pulvers liegt im Bereich von 5 x 10²⁰ cm⁻³ bis 30 x 10²⁰ cm⁻³.

Es weist das ITO-Pulver eine spezifische Oberfläche gemäß Brunauer-Emmett-Teller (BET) von maximal 3 m²/g bei einer mittleren Primärteilchengröße im Bereich von 0,03 µm bis 0,2 µm auf. Hierbei ist zu beachten, daß die Kombination von relativ geringer BET-Oberfläche mit ebenfalls kleiner Primärteilengröße nur dann zustande kommt, wenn es sich um porenfreie, annähernd kugelförmige Partikel handelt. Die Erfahrung mit dem Pulver zeigt weiterhin, daß es eine günstige Korncharakteristik aufweist, was die Verarbeitbarkeit gegenüber marktüblichen ITO-Pulvern deutlich verbessert. Letzteres wird bereits bei der Pulverpräparation durch Verdichten für die vergleichenden Widerstandsmessungen sehr anschaulich: Marktübliches ITO-Pulver erfordert anfänglich einen relativ hohen Pressdruck, um eine ausreichende Verdichtung zu erlangen, während bei dem erfindungsgemäßen ITO-Pulver allein schon durch Klopfen oder Vibrieren eine für die Widerstandsmessung geeignete Verdichtung erzielt werden kann. Kornform und Korngrößenverteilung sind bei dem erfindungsgemäßen ITO-Pulver für die Verarbeitung, insbesondere für die Formgebung durch Pressen, optimal abgestimmt.

Anhand folgender Ausführungsbeispiele soll die Erfindung näher erläutert werden:

Für das erfindungsgemäße Verfahren wird eine Anlage mit einer langgestreckten, annähernd paraboloide Plasmakammer ausgewählt, die an ihrem einen Ende eine Einlaßöffnung für die Indium-Zinn-Schmelze (90,4 Gew % In / 9,6 Gew % Sn) als ersten Reaktionspartner und für den auf 40 Vol % Sauerstoff angereicherten Luftgasstrom als zweiten Reaktionspartner aufweist. Die beiden Reaktionspartner reagieren in dem Plasmalichtbogen, der im Zentrum der sich verjüngenden, paraboloiden Plasmakammer stabilisiert ist. Durch eine der Einlaßöffnung gegenüberliegenden Auslaßöffnung wird das reagierte Material aus der Plasmakammer ausgetragen und mittels eines an der Auslaßöffnung über eine Gaszuführeinrichtung einströmenden Gases beschleunigt. Der hier wirkende Gasstrom besteht ebenfalls aus einem Luftstrom und hat eine Geschwindigkeit von 420 m/s. Auf einer Strecke von 30 cm wird durch den Gasstrom ein ITO-Mischkristallpulver mit einer Endtemperatur von ca. 350°C erhalten. Es zeichnet sich durch folgende Eigenschaften aus:
spezifische Oberfläche nach BET: 2,3 m²/g ;
mittlere Primärteilchengröße: 0,15 µm (Meßverfahren REM Rasterelektronenmikroskop);
spezifischer elektrischer Widerstand bei 40 % theor. Dichte: 2 Ω cm.

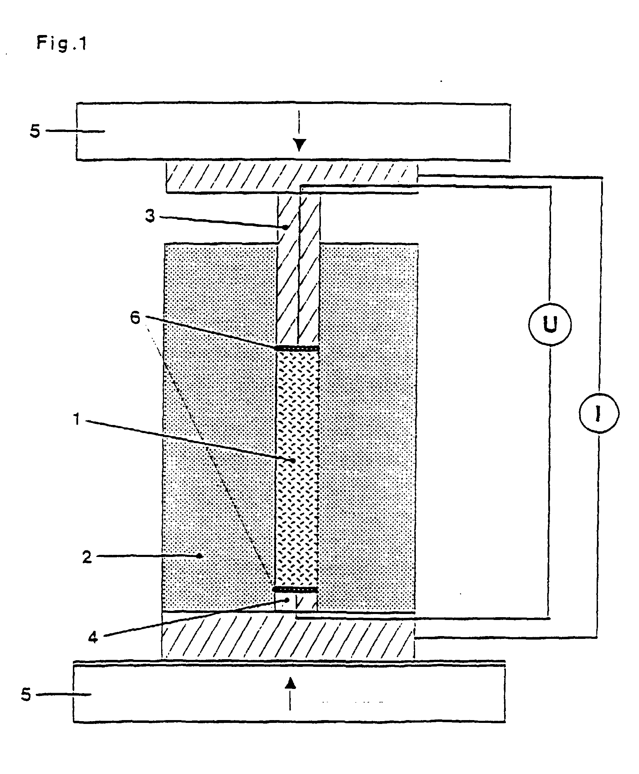

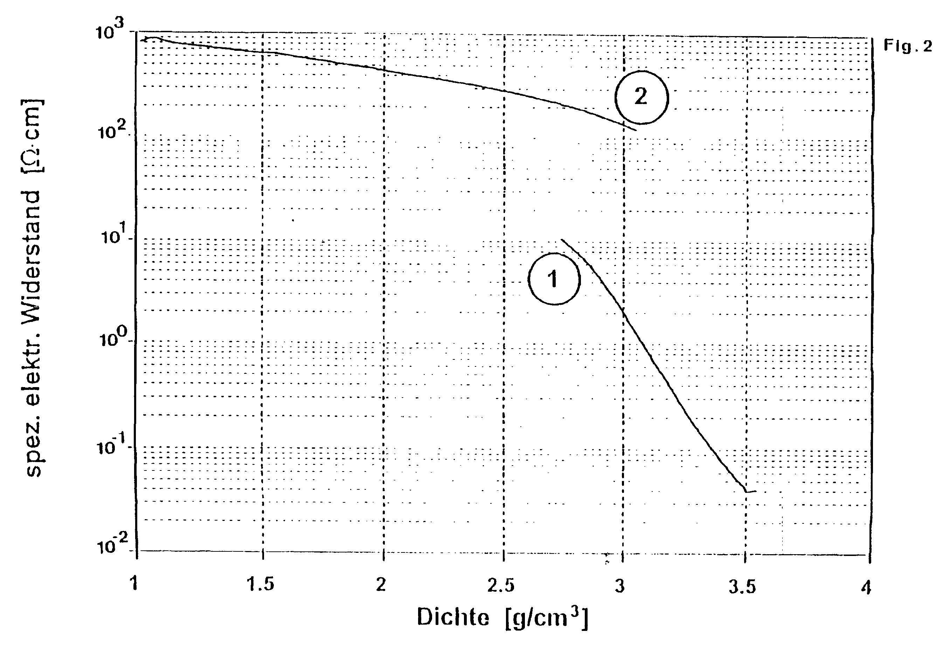

Für die Widerstandsmessung wird die aus Figur 1 ersichtliche Anordnung gewählt.
Das ITO-Pulver 1 wird in eine mit einer Matritze 2 und einem Ober- und einem Unterstempel 3,4 ausgestatteten Preßvorrichtung 5 gefüllt, wobei Ober- und Unterstempel 3,4 sich während des Preßvorgangs aufeinander zubewegen. Die Oberflächen des Ober- und des Unterstempels 3,4 sind mit Goldkontakten 6 versehen, die mit einem Stromgeber bzw. einem Meßumformer verbunden sind, so daß bei konstantem Strom, in der Figur 1 mit dem Symbol **I** gekennzeichnet, kontinuierlich während des Verdichtens des ITO-Pulvers 1 in der Matritze 2 der Spannungsabfall (in Figur 1 symbolisiert durch **U**) über der verdichteten Pulverprobe gemessen werden kann.
Im Vergleich zu dem erfindungsgemäßen, nach dem oben angeführten Beispiel hergestellten ITO-Pulver wird ebenfalls mit der Anordnung gemäß Figur 1 an einem marktüblichen ITO-Pulver der spezifische Widerstand ermittelt.
Der Verlauf des spezifischen elektrischen Widerstands über der Dichte des erfindungsgemäßen (Kurve 1) ITO-Pulvers im Vergleich mit dem eines marktüblichen ITO-Pulvers (Kurve 2) sind in Figur 2 aufgetragen. Die Werte für den spezifischen elektrischen Widerstand sind logarithmisch aufgetragen. Als Vergleichswert für den spezifischen elektrischen Widerstand soll der Meßwert bei einer Dichte von 3 g/cm³ herangezogen werden. Dies entspricht etwa 40 % theoretischer Dichte (ca.7,14 g/cm³) von Indium-Zinn-Oxid. Das erfindungsgemäße ITO-Pulver zeigt hier einen spezifischen elektrischen Widerstand von 2 Ω cm und liegt damit in seinem spezifischen Widerstand um etwa zwei Zehnerpotenzen unter dem des marktüblichen ITO-Pulvers.

Das so qualifizierte, erfindungsgemäße ITO-Mischkristallpulver wird zur weiteren Verwendung in einer evakuierten Kapsel aus Edelstahl bei einem Druck von 50 MPa und einer Temperatur von 970°C während 4 Stunden heißisostatisch gepreßt. Die durch das erfindungsgemäße Herstellverfahren in dem ITO-Mischkristallpulver als Ladungsträger erhaltenen, "eingefrorenen" Sauerstoffleerstellen bleiben bei diesem Sinterverfahren (im Gegensatz zu drucklosem Sintern unter Luftatmosphäre) weitgehend im Material vorhanden und gewährleisten so eine hohe Ladungsträgerkonzentration in dem aus dem Pulver gefertigten Target, das nach dem Heißisostatischpressen als Platte (Dicke 8 mm) aus dem Sinterblock herausgeschnitten und in einer Magnetron-Sputteranlage eingesetzt wird. Mittels eines solchen Targets wird auf ein Glassubstrat eine ITO-Schicht abgeschieden, die eine Ladungsträger-Konzentration von 10,1 x 10²⁰ cm ⁻³ aufweist. Die Ladungsträgerkonzentration der ITO-Schicht entspricht der des erfindungsgemäßen ITO-Mischkristallpulvers.

## Patentansprüche

1. Verfahren zur Herstellung eines Mischkristallpulvers mit einem elektrischem Widerstand kleiner 100 Ωcm durch die Reaktion mindestens zweier Reaktionspartner in einem Plasmalichtbogen einer eine Einfüllöffnung für die Reaktionspartner und eine Auslaßöffnung mit einer Gaszuführvorrichtung aufweisenden Plasmakammer zu einem schmelzflüssigen Material, wobei als erster Reaktionspartner eine schmelzflüssige Indium-Zinn-Legierung und als zweiter Reaktionspartner ein Gas verwendet werden, **dadurch gekennzeichnet, daß** das im Plasmalichtbogen reagierte Material an der Auslaßöffnung der Plasmakammer mit einem Gasstrom beaufschlagt wird, der das Material mit einer Abkühlrate im Bereich von 10⁵ K/s bis 10⁸ K/s auf eine Temperatur zwischen 50°C und 400°C abkühlt, wobei ein Indium-Zinn-Oxid Mischkristallpulver gebildet wird.

2. Verfahren zur Herstellung eines Mischkristallpulvers nach Anspruch 1 , **dadurch gekennzeichnet, daß** die Abkühlrate vorzugsweise im Bereich von 10⁶ K/s bis 10⁸ K/s liegt.

3. Verfahren zur Herstellung eines Mischkristallpulvers nach Anspruch 1 oder 2, **dadurch gekennzeichnet, daß** der Gasstrom zur Abkühlung des Materials eine Geschwindigkeit zwischen 300 m/s und 500 m/s aufweist.

4. Verfahren zur Herstellung eines Mischkristallpulvers nach einem der Ansprüche 1 bis 3, **dadurch gekennzeichnet, daß** als zweiter Reaktionspartner Sauerstoff verwendet wird und ein Indium-Zinn-Oxid Mischkristallpulver gebildet wird, das mindestens 90 Vol. % Indium-Zinn-Oxid Mischkristallphase im Kristallgitter von Indiumoxid aufweist.

5. Mischkristallpulver aus Indium-Zinn-Oxid mit mindestens 90 Vol. % Indium-Zinn-Oxid Mischkristallphase im Kristallgitter von Indiumoxid, **dadurch gekennzeichnet, dass** das auf 35 % bis 50 % seiner theoretischen Dichte verdichtete Indium-Zinn-Oxid Mischkristallpulver einen spezifischen elektrischen Widerstand im Bereich von 0,01 Ωcm bis 95 Ωcm aufweist und das Indium-Zinn-Oxid Mischkristallpulver eine spezifische Oberfläche nach Brunauer-Emmett-Teller (BET) von maximal 3 m²/g bei einer mittleren Primärteilchengröße im Bereich von 0,03 µm bis 0,2 µm aufweist

6. Mischkristallpulver nach Anspruch 5, **dadurch gekennzeichnet, dass** das 40 % seiner theoretischen Dichte verdichtete Indium-Zinn-Oxid Mischkristallpulver einen spezifischen elektrischen Widerstand im Bereich von 0,01 Ωcm bis 20 Ωcm aufweist.

7. Mischkristallpulver nach Anspruch 5 oder 6, **dadurch gekennzeichnet, dass** das Indium-Zinn-Oxid Mischkristallpulver eine Konzentration an elektrischen Ladungsträgern im Bereich von 5 x 10²⁰ bis 30 x 10²⁰ cm⁻³ aufweist.

8. Verwendung des Mischkristallpulvers nach einem der Ansprüche 5 bis 7 zur Erzeugung von Indium-Zinn-Oxidschichten.

## Claims

1. Process for the preparation of a solid solution powder having an electrical resistance of less than 100 Ωcm by reacting at least two reactants in a plasma arc of a plasma chamber having a filling opening for the reactants and an outlet opening with a gas feed apparatus to give a molten material, a molten indium-tin alloy being used as the first reactant and a gas as the second reactant, **characterized in that** the material reacted in the plasma arc is treated, at the outlet opening of the plasma chamber, with a gas stream which cools the material at a cooling rate in the range from 10⁵ K/s to 10⁸ K/s to a temperature between 50°C and 400°C, an indium tin oxide solid solution powder being formed.

2. Process for the preparation of a solid solution powder according to Claim 1, **characterized in that** the cooling rate is preferably in the range from 10⁶ K/s to 10⁸ K/s.

3. Process for the preparation of a solid solution powder according to Claim 1 or 2, **characterized in that** the gas stream for cooling the material has a velocity between 300 m/s and 500 m/s.

4. Process for the preparation of a solid solution powder according to any of Claims 1 to 3, **characterized in that** oxygen is used as the second reactant and an indium tin oxide solid solution powder which has at least 90% by volume of indium tin oxide solid solution phase in the crystal lattice of the indium oxide is formed.

5. Solid solution powder comprising indium tin oxide with at least 90% by volume of indium tin oxide solid solution phase in the crystal lattice of indium oxide, **characterized in that** the indium tin oxide solid solution powder compacted to 35% to 50% of its theoretical density has an electrical resistivity in the range from 0.01 Ωcm to 95 Ωcm, and the indium tin oxide solid solution powder has a specific surface area according to Brunauer-Emmett-Teller (BET) of not more than 3 m²/g at a mean primary particle size in the range from 0.03 µm to 0.2 µm.

6. Solid solution powder according to Claim 5, **characterized in that** the indium tin oxide solid solution powder compacted to 40% of its theoretical density has an electrical resistivity in the range from 0.01 Ωcm to 20 Ωcm.

7. Solid solution powder according to Claim 5 or 6, **characterized in that** the indium tin oxide solid solution powder has a concentration of electrical charge carriers in the range from 5 x 10²⁰ to 30 x 10²⁰ cm⁻³.

8. Use of the solid solution powder according to any of Claims 5 to 7 for producing indium tin oxide layers.

## Revendications

1. Procédé de préparation d'une poudre de cristal mixte ayant une résistance électrique inférieure à 100 Ωcm, par réaction d'au moins deux partenaires réactionnels avec un matériau en fusion dans un arc électrique à plasma d'une chambre à plasma, présentant une ouverture d'alimentation pour les partenaires réactionnels et une ouverture de sortie avec un dispositif d'amenée de gaz, dans lequel on utilise comme premier partenaire réactionnel un alliage d'indium-étain en fusion et comme deuxième partenaire réactionnel un gaz, **caractérisé en ce que** le matériau ayant réagi dans l'arc électrique à plasma est exposé à l'ouverture de sortie de la chambre à plasma à un courant de gaz qui refroidit le matériau à une température entre 50 °C et 400 °C avec une vitesse de refroidissement dans la plage de 10⁵ K/s à 10⁸ K/s, une poudre de cristal mixte d'oxyde d'indium-étain étant ainsi formée.

2. Procédé de préparation d'une poudre de cristal mixte selon la revendication 1, **caractérisé en ce que** la vitesse de refroidissement est de préférence dans la plage de 10⁶ K/s à 10⁸ K/s.

3. Procédé de préparation d'une poudre de cristal mixte selon la revendication 1 ou 2, **caractérisé en ce que** le courant de gaz pour le refroidissement du matériau présente une vitesse entre 300 m/s et 500 m/s.

4. Procédé de préparation d'une poudre de cristal mixte selon l'une quelconque des revendications 1 à 3, **caractérisé en ce que** l'on utilise comme deuxième partenaire réactionnel de l'oxygène et que l'on forme une poudre de cristal mixte d'oxygène indium-étain qui présente au moins 90 % en volume de phase de cristal mixte d'oxyde d'indium-étain dans le réseau cristallin de l'oxyde d'indium.

5. Poudre de cristal mixte d'indium-étain ayant au moins 90 % en volume de phase de cristal mixtes dans le réseau cristallin de l'oxyde d'indium, **caractérisée en ce que** la poudre de cristal mixte d'oxyde d'indium-étain comprimée à 35 % à 50 % de sa densité théorique présente une résistance électrique spécifique dans la plage de 0,01 Ωcm à 95 Ωcm et que la poudre de cristal mixte d'oxyde d'indium-étain présente une surface spécifique selon Brunauer-Emmett-Teller (BET) au maximum de 3 m²/g pour une granulométrie primaire moyenne dans la plage de 0,03 µm à 0,2 µm.

6. Poudre de cristal mixte selon la revendication 5, **caractérisée en ce que** la poudre de cristal mixte d'oxyde d'indium-étain comprimée à 40 % de sa densité théorique présente une résistance électrique spécifique dans la plage de 0,1 Ωcm à 20 Ωcm.

7. Poudre de cristal mixte selon la revendication 5 ou 6, **caractérisée en ce que** la poudre de cristal mixte d'oxyde d'indium-étain présente une concentration en porteurs de charge électrique dans la plage de 5 x 10²⁰ à 30 x 10²⁰ cm⁻³.

8. Utilisation de la poudre de cristal mixte selon l'une des revendications 5 à 7 pour la fabrication de couches d'oxyde d'indium-étain.
